(19) **Europäisches Patentamt / European Patent Office / Office européen des brevets**

(11) **EP 3 518 326 B1**

(12) **EUROPEAN PATENT SPECIFICATION**

(45) Date of publication and mention of the grant of the patent:
**25.10.2023 Bulletin 2023/43**

(21) Application number: **18825255.5**

(22) Date of filing: **26.06.2018**

(51) International Patent Classification (IPC):
*H01M 4/62* (2006.01)  *H01M 4/04* (2006.01)
*H01M 4/13* (2010.01)  *H01M 10/04* (2006.01)
*H01M 10/052* (2010.01)

(52) Cooperative Patent Classification (CPC):
**H01M 4/139; H01M 4/0404; H01M 4/13;**
**H01M 4/623;** H01M 10/052; H01M 50/107;
H01M 2004/028; Y02E 60/10; Y02P 70/50

(86) International application number:
**PCT/KR2018/007237**

(87) International publication number:
**WO 2019/004705 (03.01.2019 Gazette 2019/01)**

(54) **METHOD FOR PREPARING POSITIVE ELECTRODE SLURRY FOR LITHIUM SECONDARY BATTERY AND POSITIVE ELECTRODE FOR LITHIUM SECONDARY BATTERY OBTAINED THEREFROM**

VERFAHREN ZUR HERSTELLUNG EINER AUFSCHLÄMMUNG FÜR POSITIVE ELEKTRODEN FÜR EINE LITHIUM-SEKUNDÄRBATTERIE UND POSITIVE ELEKTRODE FÜR LITHIUM-SEKUNDÄRBATTERIE AUS SELBIGER ERHÄLTLICH

MÉTHODE DE PRÉPARATION DU LISIER D'ÉLECTRODE POSITIF POUR BATTERIE SECONDAIRE AU LITHIUM ET ÉLECTRODE POSITIF POUR BATTERIE SECONDAIRE AU LITHIUM OBTENUE À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2017 KR 20170081359**

(43) Date of publication of application:
**31.07.2019 Bulletin 2019/31**

(73) Proprietor: **LG Energy Solution, Ltd.**
**Seoul 07335 (KR)**

(72) Inventors:
• **MOON, Il-Jae**
**Daejeon 34122 (KR)**
• **KIM, Woo-Ha**
**Daejeon 34122 (KR)**
• **AHN, Byoung-Hoon**
**Daejeon 34122 (KR)**
• **CHOY, Sang-Hoon**
**Daejeon 34122 (KR)**

(74) Representative: **Plasseraud IP**
**66, rue de la Chaussée d'Antin**
**75440 Paris Cedex 09 (FR)**

(56) References cited:
EP-A1- 2 953 193    WO-A1-2014/148819
JP-A- 2013 196 804    JP-A- 2015 128 012
KR-A- 19980 012 675    KR-A- 20070 020 600
KR-A- 20160 087 353

**Description**

TECHNICAL FIELD

The present disclosure relates to a method for preparing positive electrode slurry for a lithium secondary battery and a positive electrode for a lithium secondary obtained therefrom.

BACKGROUND ART

Recently, as technological development and demand for portable instruments, such as portable computers, cellular phones and cameras, have been increased, secondary batteries have been increasingly in demand as energy sources for such portable instruments. Among such electrochemical devices, lithium secondary batteries which show high energy density and operating potential and has long cycle life and a low self-discharging rate have been commercialized and used widely.

In addition, recently, as the attention to environmental problems has increased, many studies have been conducted about electric vehicles and hybrid electric vehicles capable of substituting for vehicles using fossil fuel, including gasoline vehicles and diesel vehicles, one of the main causes of air pollution. Thus, as a power source for such electric vehicles and hybrid electric vehicles, a nickel metal hydride battery has been used widely. However, a lithium secondary battery having high energy density and high discharge voltage has been studied actively and commercialized partially.

More recently, it has been required for a lithium secondary battery to have high capacity and long life, and large-scale batteries for use in electric vehicles, etc. have been developed. Thus, there has been an attempt to increase the solid content in positive electrode slurry to inhibit binder migration during the coating of an electrode current collector with the slurry and to increase the adhesion of the electrode. However, when the solid content in the positive electrode slurry is increased, there are problems in that viscosity is increased to cause occlusion of a filter during the transport of the slurry and slurry coating (application) cannot be carried out smoothly.

DISCLOSURE

Technical Problem

The present disclosure is designed to solve the problems of the related art, and therefore the present disclosure is directed to providing a method for preparing positive electrode slurry for a lithium secondary battery which has a high solid content but has controlled viscosity to eliminate problems during transport and coating.

The present disclosure is also directed to providing a positive electrode using the positive electrode slurry prepared by the above-mentioned method, and a lithium secondary battery including the positive electrode.

Technical Solution

In one aspect of the present disclosure, there is provided a method for preparing positive electrode slurry for a lithium secondary battery which includes the steps of: adding a positive electrode active material, a conductive material, a binder polymer and a dispersing agent to a solvent and mixing them to obtain slurry having a solid content of 69-74 wt%; dispersing the slurry primarily for 50 minutes to 100 minutes so that the migration rate of the solid content may be 3-6 m/s; and dispersing the slurry secondarily for 5 minutes to 20 minutes so that the migration rate of the solid content may be 14-27 m/s, wherein the migration rate of the solid content is the migration length of the solid content caused by the force applied to the slurry in the dispersion system used for dispersing the slurry as a function of time.

The migration rate of the solid content refers to the migration length (m) per second of the solid content in the slurry, caused by the shear force generated by the friction between a slurry dispersing member provided in the dispersion system and the slurry during the rotation of the member.

The migration rate of the solid content is represented by the following Mathematical Formula 1:

[Mathematical Formula 1]

$$\text{Migration rate of solid content (m/s)} = 2\pi R(m) * A$$

wherein R is the radius of the slurry dispersing member,
A is the rotation per minute (rpm) of the slurry dispersing member, divided by 60 seconds.

The positive electrode slurry may include 90-98 wt% of the positive electrode active material, 0.5-5 wt% of the conductive material, 0.5-5 wt% of the binder polymer, and 0.2-0.4 wt% of the dispersing agent, based on the total weight of the solid content.

The positive electrode active material may have an average diameter (D50) of 0.5-20 $\mu$m.

The positive electrode active material may have a tap density of 0.5-5 g/cm$^3$.

The conductive material may show an average diameter (D50) distribution of 0.9-1.48 $\mu$m in the secondarily dispersed slurry.

The binder polymer may be any one selected from the group consisting of polyvinylidene fluoride, polyhexafluoropropylene-co-polyvinylidene fluoride and chlorotrifluoroethylene, or a combination of two or more of them.

The positive electrode slurry may have a viscosity of 3-12 Pa.s at a shear rate of 0.1/s after the secondary dispersion.

Advantageous Effects

According to the method for preparing positive electrode slurry of the present disclosure, it is possible to control the viscosity by carrying out two dispersion steps while increasing the solid content to a predetermined range. The obtained positive electrode slurry can be migrated and coated with ease during the manufacture of a positive electrode, and thus can provide the positive electrode with excellent adhesion.

In addition, the positive electrode slurry subjected to two dispersion steps provides an excellent effect of dispersing the conductive material, thereby improving the homogeneity and dispersibility of the total slurry, and thus can contribute to a decrease in slurry viscosity significantly.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In one aspect, there is provided a method for preparing positive electrode slurry for a lithium secondary battery, which includes the steps of: (S1) adding a positive electrode active material, a conductive material, a binder polymer and a dispersing agent to a solvent to obtain slurry; (S2) dispersing the slurry primarily; and (S3) dispersing the primarily dispersed slurry secondarily.

According to the present disclosure, step (S1) is carried out in such a manner that the solid content in the positive electrode slurry may be controlled to 69-74 wt%, or 69.5-73 wt%. Herein, 'solid content' means positive electrode materials other than the solvent of the positive electrode slurry, i.e. the positive electrode active material, conductive material, binder polymer and the dispersing agent. When such solid content is a high content within the above-defined range, the ratio of solvent evaporating after the slurry is coated on the electrode is decreased to reduce binder migration, resulting in an increase in adhesion. Such an increase in adhesion may reduce the content of the binder in the total composition. In addition, the content of the active material may be increased according to such a decrease in binder, and thus the electrode may have increased energy density.

When the positive electrode slurry has a solid content less than 69 wt%, adhesion of the finished electrode may be decreased, since the positive electrode slurry is affected significantly by binder migration during the drying of the slurry. Meanwhile, when the solid content is larger than 74 wt%, collision of the electrode material particles may occur due to a decreased interval between particles of the electrode material, and thus particle aggregates may be formed by aggregation of particles, resulting in a rapid increase in viscosity.

The positive electrode slurry may include the positive electrode active material in an amount of 90-98 wt%, or 95-98 wt%, based on the total weight of the solid content. When the content of the positive electrode active material satisfies the above-defined range, there is no degradation of capacity, and relative contents of the binder and conductive material are controlled adequately to prevent degradation of adhesion to the positive electrode current collector and degradation of conductivity.

As the positive electrode active material, a lithium-containing transition metal oxide may be used preferably. Particular examples of the lithium-containing transition metal oxide include any one selected from the group consisting of $Li_xCoO_2(0.5 < x < 1.3)$, $Li_xNiO_2(0.5 < x < 1.3)$, $Li_xMnO_2(0.5 < x < 1.3)$, $Li_xMn_2O_4(0.5 < x < 1.3)$, $Li_x(Ni_aCo_bMn_c)O_2$ $(0.5 < x < 1.3, 0 < a < 1, 0 < b < 1, 0 < c < 1, a + b + c = 1)$, $Li_xNi_{1-y}Co_yO_2(0.5 < x < 1.3, 0 < y < 1)$, $Li_xCo_{1-y}Mn_yO_2(0.5 < x < 1.3, 0 \leq y < 1)$, $Li_xNi_{1-y}Mn_yO_2(0.5 < x < 1.3, O \leq y < 1)$, $Li_x(Ni_aCo_bMn_c)O_4(0.5 < x < 1.3, 0 < a < 2, 0 < b < 2, 0 < c < 2, a + b + c = 2)$, $Li_xMn_{2-z}Ni_zO_4(0.5 < x < 1.3, 0 < z < 2)$, $Li_xMn_{2-z}Co_zO_4(0.5 < x < 1.3, 0 < z < 2)$, $Li_xCoPO_4(0.5 < x < 1.3)$ and $Li_xFePO_4(0.5 < x < 1.3)$, or a combination of two or more of them. The lithium-containing transition metal oxide may be coated with a metal, such as aluminum (Al) or metal oxide. In addition to the lithium-containing transition metal oxide, sulfide, selenide or halide may be used, but the scope of the present disclosure is not limited thereto.

The positive electrode active material may have an average particle diameter (D50) of 0.5-20 $\mu$m or an average particle diameter (D50) of 1-20 $\mu$m. In a variant, the positive electrode active material may have an average particle diameter (D50) of 0.5-1 $\mu$m. When the average particle diameter of the positive electrode active material satisfies the above-defined range, it is possible to prevent degradation of the dispersibility in the positive electrode slurry caused by aggregation of the positive electrode active material particles, and to ensure mechanical strength and specific surface area of the positive electrode active material. In addition, the positive electrode active material may have an average particle diameter (D50) of 0.5-15 $\mu$m, considering a significant effect of improving the rate characteristics and initial capacity characteristics derived from the controlled particle size of the positive electrode active material.

As used herein, 'average particle diameter (D50)' means the D50 value determined by laser diffraction particle size distribution analysis.

The positive electrode active material may have a tap density of 0.5-5 g/cm$^3$. When the tap density of the positive electrode active material satisfies the above-defined range, the amount of positive electrode active material per volume of the positive electrode is not decreased. Thus, it is possible to ensure the battery capacity.

As used herein, 'tap density' means the value obtained by introducing a predetermined weight of positive electrode active material to a mess cylinder, measuring the total volume of voids between particles when tapping the positive electrode active material 200 times, and dividing the weight of the positive electrode active material by the total volume. Such tap density may be measured by using a general tap density measuring system, particularly by using a tap density tester.

The positive electrode slurry may include the conductive material in an amount of 0.5-5 wt% or 2-4 wt%. When the amount of the conductive material satisfies the above-defined range, it is possible to impart sufficient conductivity and to ensure the battery capacity by preventing a decrease in amount of the positive electrode active material.

Any conductive material used conventionally in the art may be used with no particular limitation. Particular examples of the conductive material may include artificial graphite, natural graphite, carbon black, acetylene black, ketjen black, denka black, thermal black, channel black, carbon fibers, metallic fibers, aluminum, tin, bismuth, silicon, antimony, nickel, copper, titanium, vanadium, chromium, manganese, iron, cobalt, zinc, molybdenum, tungsten, silver, gold, lanthanum, ruthenium, platinum, iridium, titanium dioxide, polyaniline, polythiophene, polyacetylene, polypyrrole or a combination thereof, but are not limited thereto.

The conductive material may have an average diameter of 15-70 nm. Herein, the average diameter of the conductive material may be determined by any method used conventionally in the art. For example, it may be determined by using a scanning electron microscope.

When the average diameter of the conductive material satisfies the above-defined range, it is possible to prevent degradation of dispersibility caused by aggregation of conductive material particles, and degradation of conductivity in the positive electrode active material layer caused by a decrease in specific surface area and a difficulty in forming a conductive path.

The positive electrode slurry may include the binder polymer in an amount of 0.5-5 wt% or 1-3 wt% based on the total weight of the solid content. When the amount of the binder polymer satisfies the above-defined range, it is possible to provide an electrode with sufficient adhesion while preventing degradation of the capacity characteristics of the battery.

Particular examples of the binder polymer include polyvinylidene fluoride (PVdF), polyhexafluoropropylene-co-polyvinylidene fluoride (PVdf-HFP), chlorotrifluoroethylene (CTFE) or a combination thereof.

The positive electrode slurry may include the dispersing agent in an amount of 0.2-0.4 wt% based on the total weight of the solid content. When the amount of the dispersing agent satisfies the above-defined range, it is possible to accomplish a desired effect of improving dispersibility while not reducing the amount of the positive electrode active material and the other electrode materials.

Any dispersing agent used conventionally for positive electrode slurry may be used with no particular limitation. For example, considering an effect of improving battery characteristics, particular examples of the dispersing agent include cellulose compounds, polyalkylene oxide, polyvinyl alcohol, polyvinyl pyrrolidone, polyvinyl acetal, polyvinyl ether, polyvinyl sulfonic acid, polyvinyl chloride (PVC), polyvinylidene fluoride, chitosan, starch, amylose, polyacrylamide, poly-N-isopropylacrylamide, poly-N,N-dimethylacrylamide, polyethylene imine, polyoxyethylene, poly(2-methoxyethoxylethylene), poly(acrylamide-co-diallyldimethylammonium chloride), acrylonitrile/butadiene/styrene (ABS) polymer, acrylonitrile/styrene/acrylate (ASA) polymer, a blend of acrylonitrile/styrene/acrylate (ASA) polymer with propylene carbonate, styrene/acrylonitrile (SAN) copolymer, or methyl methacrylate/acrylonitrile/butadiene/styrene (MABS) polymer. Such dispersing agents may be used alone or in combination.

The solvent for dissolving the binder polymer while dispersing the other solid contents in the positive electrode slurry is not particularly limited, as long as it is used conventionally for manufacturing a positive electrode. Non-limiting examples of the solvent include amine solvents, such as N,N-dimethylaminopropylamine, diethylene triamine or N,N-dimethylformamide (DMF), ether solvents, such as tetrahydrofuran, ketone solvents, such as methyl ethyl ketone, ester solvents, such as methyl acetate, amide solvents, such as dimethyl acetamide or 1-methyl-2-pyrrolidone, dimethyl sulfoxide (DMS), or the like, but are not limited thereto.

According to the present disclosure, in step (S2), the slurry obtained by dispersing the above-mentioned ingredient in the solvent is dispersed preliminarily. Herein, the primary dispersion is carried out for 50-100 minutes so that the migration rate of the solid content in the slurry may be 3-6 m/s.

The migration rate of the solid content (also referred to as dispersion rate hereinafter) is the migration length of the solid content caused by the force applied to the slurry in the dispersion system used for dispersing the slurry as a function of time.

Particularly, 'migration rate of the solid content' refers to the migration length (m) per second of the solid content in the slurry, caused by the shear force generated by the friction between a slurry dispersing member, such as a blade, provided in the dispersion system and the slurry during the rotation of the member.

The migration rate of the solid content is in proportion to the radius R of the slurry dispersing member provided in the dispersion system and rotation per minute (rpm), and may be represented by the following Mathematical Formula 1. Therefore, it is possible to control the migration rate of the solid content in the slurry by adjusting the radius and rotation speed of the dispersion blade.

[Mathematical Formula 1]

$$\text{Migration rate of solid content (m/s)} = 2\pi R(m) * A$$

wherein R is the radius of the slurry dispersing member, and
A is the rotation per minute (rpm) of the slurry dispersing member, divided by 60 seconds.

When the primary dispersion rate is less than 3 m/s, the particles in the slurry may show decreased dispersibility due to insufficient dispersion energy. When the primary dispersion rate is larger than 6 m/s, the temperature may be increased to cause heat generation, resulting in gelling of the slurry and a change in physical properties of the slurry.

After carrying out the primary dispersion, the slurry may have a viscosity of 13-32 Pa.s at a shear rate of 0.1/s.

As used herein, 'viscosity' means the value determined by using a viscometer used conventionally for determining the viscosity of a fluid (e.g. BM type viscometer (TIKIMEC), Rheomter (TA instruments), etc.) at a predetermined temperature (25°C). Particularly, the Rheometer can determine not only the viscosity of a fluid but also the elastic properties thereof (e.g. a change in viscosity depending on shear rate), and thus may be used herein more suitably.

The slurry having a viscosity within the above-defined range has low fluidity, thereby making it difficult to transport the slurry and to carry out coating. Thus, dispersion is further carried out herein in order to reduce the viscosity of the slurry and to increase the fluidity thereof.

In other words, in step (S3), the preliminarily dispersed slurry is further dispersed at a rate approximately three times of the dispersion rate of the primary dispersion, for example, at a rate of 14-27 m/s or 14-24 m/s for a short time of 5-20 minutes.

The slurry to be prepared according to the present disclosure has a high solid content of 69-74 wt%. Thus, when the slurry is subjected to primary dispersion under severe conditions as soon as the slurry is formed, the temperature may be increased undesirably. As mentioned above, when the primary dispersion rate is larger than 6 m/s, the slurry may undergo gelling or a change in physical properties due to heat generation. To prevent this, the slurry is preliminarily dispersed at a mild rate, and then secondary dispersion is carried out at a high rate for a short time to reduce the viscosity while not causing a change in slurry.

In addition, such secondary dispersion at a high rate allows improvement of dispersion of the conductive material in the slurry. Thus, the conductive material in the slurry may provide an average particle diameter (D50) of 0.9-1.48 $\mu$m, particularly 0.9-1.45 $\mu$m, and an average particle diameter (D90) of 3-4 $\mu$m, particularly 3.58-3.93 $\mu$m, in its secondary particle state. Such improvement of dispersion of the conductive material improves homogeneity and dispersibility of the whole slurry, thereby significantly contributing to a decrease in viscosity of the slurry.

When the secondary dispersion rate is less than 14 m/s, it is not possible to reduce the viscosity sufficiently due to insufficient dispersion energy. When the secondary dispersion rate is higher than 27 m/s, particle collision becomes severe due to such excessively strong dispersion energy, thereby causing particle aggregation and an increase in viscosity.

The dispersion system used for the primary dispersion and the secondary dispersion may include a homogenizer, beads mill, ball mill, basket mill, attrition mill, multifunctional agitator, clear mixer, TK mixer, or the like. According to the present disclosure, the primary dispersion and the secondary dispersion may be carried out in the same system or different systems.

After carrying out the primary dispersion and the secondary dispersion as described above, the slurry has a viscosity of 3-12 Pa.s, particularly 3.8-11.3 Pa.s at a shear rate of 0.1/s. Thus, it is possible to solve the problems of occlusion of a filter and defect generation in coating during the transport of slurry for preparing a positive electrode.

In another aspect of the present disclosure, there is provided a positive electrode using the positive electrode slurry obtained by the above-described method.

Particularly, the positive electrode according to the present disclosure includes a positive electrode active material layer formed by applying the positive electrode slurry to at least one surface of a positive electrode current collector, followed by drying and pressing. The positive electrode active material layer is formed by using the slurry having a viscosity controlled to a predetermined range, and thus can maintain the positive electrode active material, conductive material, binder polymer and dispersing agent in a homogeneously dispersed state. The binder may be in dot-like contact with the positive electrode active material and the conductive material.

The positive electrode current collector is not particularly limited, as long as it has conductivity while not causing any chemical change in the corresponding battery. Particular examples of the positive electrode current collector include stainless steel, aluminum, nickel, titanium, baked carbon, or aluminum or stainless steel surface treated with carbon, nickel, titanium, silver, etc., or the like.

The positive electrode current collector generally may have a thickness of 3-500 $\mu$m. The positive electrode current collector may have fine surface irregularities in order to increase the adhesion of the positive electrode active material. For example, the positive electrode current collector may have various shapes, such as a film, sheet, foil, net, porous body, foam, nonwoven body, or the like.

In the positive electrode, the positive electrode active material layer may be obtained according to a conventional method, except that the positive electrode slurry prepared by the above-described method is used.

For example, application of the positive electrode slurry may be carried out on one surface of the positive electrode current collector by using a conventional slurry coating process, such as bar coating, spin coating, roll coating, slot-die coating or spray coating. Herein, such coating processes may be used alone or in combination. In addition, when applying the positive electrode slurry, it is preferred to apply the positive electrode slurry to an adequate thickness considering the loading amount and thickness of the active material in the finished positive electrode active material layer.

Then, the coating film of the positive electrode slurry formed on the positive electrode current collector is subjected to a drying step. Herein, the drying step may be carried out by heat treatment or hot air injection at a temperature where the moisture contained in the positive electrode may be removed to the highest degree simultaneously with the removal of the solvent in the positive electrode slurry and the binding force of the binder polymer may be increased. Particularly, the drying step may be carried out at a temperature ranging from the boiling point of the solvent to the melting point of the binder, more particularly at a temperature of 100-150°C. More particularly, the drying step may be carried out at a temperature of 100-120°C under a pressure of 10 torr or less for 1-50 hours.

After the drying step, the pressing step may be carried out according to a conventional method.

In a variant, the positive electrode may be obtained by applying and drying the above-described positive electrode slurry on a separate support to form a film for forming a positive electrode, removing the film from the support, and then laminating the film for forming a positive electrode on a positive electrode current collector.

According to the present disclosure, the obtained positive electrode allows homogeneous dispersion of the positive electrode slurry used for forming the positive electrode active material layer to reduce the internal resistance, when the positive electrode is applied to a battery, and can provide the battery with improved output characteristics. In addition, it is possible to provide the electrode with excellent adhesion, since migration of the binder polymer is inhibited.

In still another aspect, there is provided a lithium secondary battery including the positive electrode.

Particularly, the lithium secondary battery includes the positive electrode, a negative electrode, a separator interposed between the positive electrode and the negative electrode, and a nonaqueous electrolyte.

In the lithium secondary battery, the negative electrode includes a negative electrode current collector and a negative electrode active material layer formed on the negative electrode current collector.

In the negative electrode, the negative electrode current collector is not particularly limited, as long as it has conductivity while not causing any chemical change in the corresponding battery. Particular examples of the negative electrode current collector include copper, stainless steel, aluminum, nickel, titanium, baked carbon, or copper or stainless steel surface treated with carbon, nickel, titanium, silver, etc., or the like. In addition, the negative electrode current collector may have various shapes, such as a film, sheet, foil, net, porous body, foam, nonwoven body, or the like. Further, the negative electrode current collector generally has a thickness of 3-500 $\mu$m. The negative electrode current collector may have fine surface irregularities in order to increase the adhesion of the negative electrode active material.

In the negative electrode, the negative electrode active material layer may be obtained by dissolving and dispersing a negative electrode active material, a binder and a conductive material in a solvent to form negative electrode slurry, and applying the negative electrode slurry to the negative electrode current collector, followed by drying and pressing.

Herein, the negative electrode active material may be a compound capable of reversible lithium intercalation and deintercalation. Particular examples of the negative electrode active material include: carbonaceous materials, such as artificial graphite, natural graphite, graphitized carbon fibers and amorphous carbon; metallic compounds capable for forming alloys with lithium, such as Si, Al, Sn, Pb, Zn, Bi, In, Mg, Ga, Cd, Si alloys, Sn alloys or Al alloys; or composites including metallic compounds and carbonaceous materials. Such negative electrode active materials may be used alone or in combination. In addition, lithium metal foil may be used as the negative electrode active material.

The binder polymer functions to improve the binding of negative electrode active material particles and the binding between the negative electrode active material and the negative electrode current collector. Particular examples of the binder polymer include polyvinylidene fluoride (PVDF), polyvinyl alcohol, starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butyrene rubber (SBR), fluororubber, various copolymers, or the like. Such binder polymers may be used alone or in combination. For example, the binder polymer may be styrene-butadiene rubber. In addition, the binder polymer may be used in an amount of 10-30 wt% based on the total weight of the negative electrode active material layer.

The conductive material is the same as described hereinabove with reference to the positive electrode slurry. The conductive material may be used in an amount of 1-15 wt% based on the total weight of the negative electrode active material layer. When the amount of the conductive material satisfies the above-defined range, it is possible to prevent degradation of the battery performance caused by an increase in internal resistance of the battery, while not decreasing the amount of the other electrode materials, such as the active material.

The solvent may be a solvent used conventionally in the art, and particular examples thereof include dimethyl sulfoxide (DMSO), isopropyl alcohol, N-methyl pyrrolidone (NMP), acetone or water. Such solvents may be used alone or in combination.

The negative electrode slurry may further include a thickening agent in addition to the above-described ingredients. Particularly, the thickening agent may be a cellulose compound, such as carboxymethyl cellulose (CMC). The thickening agent may be used in an amount of 1-10 wt% based on the total weight of the negative electrode active material layer.

The negative electrode slurry may be applied to one surface of the negative electrode current collector by using a conventional slurry coating process, such as bar coating, spin coating, roll coating, slot-die coating or spray coating. Herein, such coating processes may be used alone or in combination. In addition, when applying the negative electrode slurry, it is preferred to apply the negative electrode slurry to an adequate thickness considering the loading amount and thickness of the negative electrode active material in the finished negative electrode active material layer.

Then, the coating film of the negative electrode slurry formed on the negative electrode current collector is subjected to a drying step. Herein, the drying step may be carried out by heat treatment or hot air injection at a temperature where the moisture contained in the negative electrode may be removed to the highest degree simultaneously with the removal of the solvent in the negative electrode slurry and the binding force of the binder polymer may be increased. Particularly, the drying step may be carried out at a temperature ranging from the boiling point of the solvent to the melting point of the binder, more particularly at a temperature of 100-150°C. More particularly, the drying step may be carried out at a temperature of 100-120°C under a pressure of 10 torr or less for 1-50 hours.

After the drying step, the pressing step may be carried out according to a conventional method.

In a variant, the negative electrode may be obtained by applying and drying the above-described negative electrode slurry on a separate support to form a film for forming a negative electrode, removing the film from the support, and then laminating the film for forming a negative electrode on a negative electrode current collector. Herein, the negative electrode slurry, negative electrode current collector and the application, drying and pressing steps are the same as described above.

Meanwhile, in the lithium secondary battery, any separator used conventionally as a separator for a lithium secondary battery may be used with no particular limitation. Particularly, it is preferred to use a separator which shows low resistance against electrolyte ion transport and high electrolyte impregnation ability. For example, a porous polymer film obtained by using a polyolefin-based polymer, such as ethylene homopolymer, propylene homopolymer, ethylene/butane copolymer, ethylene/hexane copolymer or ethylene/methacrylate copolymer, may be used alone, or a stack of such polymer films may be used. In addition, a conventional porous nonwoven web, such as a nonwoven web formed of high-melting point glass fibers or polyethylene terephthalate fibers, may be used.

The electrolyte used according to the present disclosure may include an organic liquid electrolyte, inorganic liquid electrolyte, solid polymer electrolyte, gel polymer electrolyte, solid inorganic electrolyte or molten inorganic electrolyte that may be used for manufacturing a lithium secondary battery, but is not limited thereto.

Particularly, the electrolyte includes an organic solvent and a lithium salt.

Any organic solvent may be used with no particular limitation, as long as it can function as a medium through which the ions participating in the electrochemical reactions of the corresponding battery can be transported. Particular examples of the organic solvent include: ester solvents, such as methyl acetate, ethyl acetate, γ-butyrolactone or ε-caprolactone; ether solvents, such as dibutyl ether or tetrahydrofuran; ketone solvents, such as cyclohexanone; aromatic hydrocarbon solvents, such as benzene or fluorobenzene; carbonate solvents, such as dimethyl carbonate (DMC), diethyl carbonate (DEC), methyl ethyl carbonate (MEC), ethyl methyl carbonate (EMC), ethylene carbonate (EC) or propylene carbonate (PC); or the like. Such solvents may be used alone or in combination. Particularly, the organic solvent may be a carbonate solvent. More particularly, the carbonate solvent may be a combination of a cyclic carbonate (e.g. ethylene carbonate or propylene carbonate), which has high ion conductivity and a high dielectric constant and can increase charge/discharge performance of a battery, with a low-viscosity linear carbonate (e.g. ethyl methyl carbonate, dimethyl carbonate or diethyl carbonate).

The lithium salt may be any lithium compound with no particular limitation, as long as the lithium compound can provide lithium ions used for a lithium secondary battery. Particular examples of the lithium salt include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like. Such lithium salts may be used alone or in combination. The lithium salt may be present at a concentration of 0.6-2 mol% in the electrolyte.

In addition to the above-mentioned electrolyte ingredients, the electrolyte may include at least one additive selected from pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the life characteristics of a battery, to inhibit degradation of the capacity of a battery and to improve the discharge capacity of a battery. The additive may be used in an amount of 0.1-5wt % based on the total weight of the electrolyte.

The above-described lithium secondary battery may be obtained by interposing the separator between the positive electrode and the negative electrode to form an electrode assembly, introducing the electrode assembly into a casing, and injecting an electrolyte into the casing. The lithium secondary battery may be a cylindrical battery obtained by interposing the separator between the positive electrode and the negative electrode to form an electrode assembly, introducing the electrode assembly into a casing, and injecting an electrolyte into the casing.

As described above, the lithium secondary battery including the positive electrode obtained by using the positive electrode slurry shows excellent discharge capacity, output characteristics and capacity maintenance stably, and thus is useful for portable instruments, such as cellular phones, notebook computers or digital cameras, and electric vehicles such as hybrid electric vehicles.

In yet another aspect of the present disclosure, there are provided a battery module including the lithium secondary battery as a unit cell, and a battery pack including the battery module.

The battery module or battery pack may be used as a power source for at least one medium- to large-size device selected from: power tools; electric cars, including electric vehicles (EV), hybrid electric vehicles (HEV), plug-in hybrid electric vehicles (PHEV), or the like; electric power storage systems; or the like.

MODE FOR DISCLOSURE

Hereinafter, the present disclosure will be explained in detail with reference to Examples. The following examples are provided so that the present disclosure will be thorough and complete, and will fully convey the scope of the present disclosure to those skilled in the art. However, the present disclosure may be embodied in many different forms and should not be construed as limited to the exemplary embodiments set forth therein.

**Example 1:**

First, 95 parts by weight of $Li(Ni_{0.6}Mn_{0.2}Co_{0.2})O_2$ (average particle diameter (D50): 11 $\mu$m, tap density: 2.2 g/cm$^3$) as a positive electrode active material, 3.0 parts by weight of carbon nanofibers (average diameter: 38 nm) as a conductive material, 1.7 parts by weight of PVDF as a binder and 0.3 parts by weight of carboxymethyl cellulose (CMC, Mw: 2,500,000g/mol) as a dispersing agent were added to N-methylpyrrolidone (NMP) as a solvent, and the ingredients were mixed to obtain slurry having a solid content of 69.5 wt%.

The slurry was introduced to a homogenizer (Homogenizing Disper Model 2.5, PRIMIX) equipped with dispersion blades having a radius of 1.5 cm and the homogenizer was operated at a rate of 3,000 rpm to carry out primary dispersion for 75 minutes so that the migration rate of the solid content in the slurry might be 4.7 m/s. The viscosity of the slurry after such primary dispersion was determined in the same manner as descried in Test Example 1. The results are shown in Table 1.

Then, the slurry was introduced to a clear mixer (CLM-CS-7) equipped with dispersion blades having a radius of 1.5 cm, and the clear mixer was operated at a rate of 12,000 rpm to carry out secondary dispersion for 5 minutes so that the migration rate of the solid content might be 18.8 m/s to obtain positive electrode slurry having the viscosity as shown in Table 1.

For reference, the migration rate (m/s) of the solid content is in proportion to the radius R of the dispersion blades and the rotation per minute (rpm), i.e. rotation speed of the dispersion blades, and may be calculated according to Mathematical Formula 1:

[Mathematical Formula 1]

Migration rate of solid content (m/s) = $2\pi R(m)*A$

wherein R is the radius of the slurry dispersing member, and
A is the rotation per minute (rpm) of the slurry dispersing member, divided by 60 seconds.

**Example 2:**

Positive electrode slurry was obtained in the same manner as Example 1, except that the solid content of the positive electrode slurry was 73 wt% and the operation speed of the clear mixer during the secondary dispersion was controlled so that the migration rate of the solid content might be 14.1 m/s.

**Example 3:**

Positive electrode slurry was obtained in the same manner as Example 2, except that the operation speed of the clear mixer during the secondary dispersion was controlled so that the migration rate of the solid content might be 18.8 m/s.

**Example 4:**

Positive electrode slurry was obtained in the same manner as Example 2, except that the operation speed of the clear mixer during the secondary dispersion was controlled so that the migration rate of the solid content might be 23.6 m/s.

**Comparative Example 1:**

Positive electrode slurry was obtained in the same manner as Example 1, except that the secondary dispersion was not carried out.

**Comparative Example 2:**

Positive electrode slurry was obtained in the same manner as Example 2, except that the operation speed of the clear mixer during the secondary dispersion was controlled so that the migration rate of the solid content might be 12.6 m/s.

**Comparative Example 3:**

Positive electrode slurry was obtained in the same manner as Example 2, except that the operation speed of the clear mixer during the secondary dispersion was controlled so that the migration rate of the solid content might be 31.4 m/s.

**Comparative Example 4:**

Positive electrode slurry was obtained in the same manner as Example 1, except that the solid content of the positive electrode slurry was 75.0 wt% and the operation speed of the clear mixer during the secondary dispersion was controlled so that the migration rate of the solid content might be 18.8 m/s.

**Test Example 1: Viscosity**

Each positive electrode slurry obtained from Examples and Comparative Examples was determined for viscosity. The viscosity was determined by using the Rheometer (available from TA instruments). Shear viscosity was measured at each shear rate while the shear rate was increased at a predetermined interval from 0.001 to 500/s. Table 1 shows the viscosity of each positive electrode slurry at 0.1/s so that the viscosity may be evaluated according to the solid content and dispersion rate.

[Table 1]

| Positive electrode slurry | Solid content (wt%) | Primary dispersion rate[1] (m/s) | Secondary dispersion rate[2] (m/s) | Viscosity after primary dispersion (Pa.s @ 0.1/s) | Viscosity after secondary dispersion (Pa.s @ 0.1/s) |
|---|---|---|---|---|---|
| Ex. 1 | 69.5 | 4.7 | 18.8 | 13.1 | 3.8 |
| Ex. 2 | 73 | 4.7 | 14.1 | 26.5 | 11.3 |
| Ex. 3 | 73 | 4.7 | 18.8 | 26.5 | 7.3 |
| Ex. 4 | 73 | 4.7 | 23.6 | 26.5 | 5.4 |
| Comp. Ex. 1 | 69.5 | 4.7 | - | 13.1 | 13.1 |
| Comp. Ex. 2 | 73 | 4.7 | 12.6 | 26.5 | 25.8 |
| Comp. Ex. 3 | 73 | 4.7 | 31.4 | 26.5 | 55.6 |
| Comp. Ex. 4 | 75 | 4.7 | 18.8 | 38.2 | 152.9 |
| 1) Migrate rate of the solid content in the slurry obtained from primary dispersion<br>2) Migrate rate of the solid content in the slurry obtained from secondary dispersion | | | | | |

As can be seen from Table 1, the positive electrode slurry according to each of Examples 1-4 wherein the solid content is within a range of 69-74 wt%, the primary dispersion rate is 3-6 m/s and the secondary dispersion rate is 14-27 m/s has a low viscosity of 3-12 Pa.s at a shear rate of 0.1s.

On the contrary, the positive electrode slurry according to each of Comparative Examples 1 and 2, wherein the solid content is within the above-defined range but the secondary dispersion was not carried out or was carried out at a rate less than 14 m/w, has high viscosity. Meanwhile, Comparative Example 3 using an excessively high dispersion rate larger than 27 m/s during the secondary dispersion shows an increase in viscosity.

In addition, Comparative Example 4, wherein the primary dispersion rate and the secondary dispersion rate are within the above-defined range, shows an excessive increase in viscosity. This is because the solid content exceeds a predetermined level, i.e. 74 wt%, and the particle distance in the electrode materials is reduced to cause particle collision, thereby inducing formation of structures and a rapid increase in viscosity. Therefore, the positive electrode slurry obtained from Comparative Example 4 causes occlusion of a filter during the transport of the slurry for manufacturing an electrode and significant deterioration of coatability.

**Test Example 2: Particle Diameter Distribution of Dispersed Conductive Material**

The particle diameter distribution of the dispersed conductive material in the positive electrode slurry according to each of Examples and Comparative Examples was determined by using a laser diffraction-based dispersed particle size analyzer which determines dispersed particle size distribution through laser scattering intensity depending on particle size. The results are shown in Table 2. Herein, the dispersed particle size distribution of the conductive material means an average dispersed particle diameter distribution obtained in a slurry dispersion state, not the particle diameter of the conductive material itself.

**Test Example 3: Determination of Adhesion**

The positive electrode slurry according to each of Examples and Comparative Examples was coated on aluminum foil, dried by heat treatment at 130°C, and then pressed to obtain a positive electrode.

To determine the adhesion of the resultant positive electrode, a slide glass was attached to one surface of a double-sided tape and the coated surface of the positive electrode was attached to the other surface. Then, the adhesion was determined by the conventional 180° adhesion test method. The results are shown in Table 2.

[Table 2]

| | | Solid content (wt%) | Secondary dispersion rate (m/s) | Dispersed particle diameter distribution of conductive material [μm] | | Adhesion [gf/ 20mm] |
|---|---|---|---|---|---|---|
| | | | | D50 | D90 | |
| Ex. 1 | | 69.5 | 18.8 | 1.25 | 3.58 | 14.3 |
| Comp. Ex. 1 | | | - | 1.57 | 3.93 | 13.6 |
| Ex. 2 | | 73 | 14.1 | 1.45 | 3.91 | 29.5 |
| Ex. 3 | | | 18.8 | 1.31 | 3.88 | 31.3 |
| Ex. 4 | | | 23.6 | 1.27 | 3.81 | 30.7 |
| Comp. Ex. 2 | | | 12.6 | 1.54 | 4.07 | 28.7 |
| Comp. Ex. 3 | | | 31.4 | 1.51 | 4.94 | 30.6 |
| Comp. Ex. 4 | | 75 | 18.8 | 1.53 | 4.15 | 35.8 |

As can be seen from Table 2, the positive electrode slurry according to each of Examples 1-4 shows a smaller dispersed particle diameter distribution of the conductive material in the slurry and improved dispersibility, as compared to Comparative Examples 1-3 wherein the secondary dispersion rate is not within a range of 14-27 m/s, under the same solid content condition. Thus, the positive electrode slurry according to each of Examples 1-4 provides a positive electrode with excellent adhesion during the manufacture of the electrode. Particularly, such improvement of the dispersibility of the conductive material improves the homogeneity and dispersibility of the slurry during the manufacture of the positive electrode, thereby contributing to a decrease in slurry viscosity.

Meanwhile, in the case of Comparative Example 4, it has the highest solid content and shows increased adhesion, but shows low dispersibility of the conductive material in the slurry, resulting in a significant increase in slurry viscosity.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

**Claims**

1. A method for preparing positive electrode slurry for a lithium secondary battery which comprises the steps of:

adding a positive electrode active material, a conductive material, a binder polymer and a dispersing agent to a solvent and mixing them to obtain slurry having a solid content of 69-74 wt%;
dispersing the slurry primarily for 50 minutes to 100 minutes so that the migration rate of the solid content may be 3-6 m/s; and
dispersing the slurry secondarily for 5 minutes to 20 minutes so that the migration rate of the solid content may be 14-27 m/s,
wherein the migration rate of the solid content is the migration length of the solid content caused by the force applied to the slurry in the dispersion system used for dispersing the slurry as a function of time,
wherein the migration rate of the solid content refers to the migration length (m) per second of the solid content in the slurry, caused by the shear force generated by the friction between a slurry dispersing member provided in the dispersion system and the slurry during the rotation of the member, and
wherein the migration rate of the solid content is calculated by the following Mathematical Formula 1:

[Mathematical Formula 1]

Migration rate of solid content (m/s) = $2\pi R(m) * A$

wherein R is the radius of the slurry dispersing member, and
A is the rotation per minute (rpm) of the slurry dispersing member, divided by 60 seconds, wherein all parameters are measured according to the methods described in the specification.

2. The method for preparing positive electrode slurry for a lithium secondary battery according to claim 1, wherein the positive electrode slurry comprises 90-98 wt% of the positive electrode active material, 0.5-5 wt% of the conductive material, 0.5-5 wt% of the binder polymer, and 0.2-0.4 wt% of the dispersing agent, based on the total weight of the solid content.

3. The method for preparing positive electrode slurry for a lithium secondary battery according to anyone of claim 1 or 2, wherein the positive electrode active material has an average diameter (D50) of 0.5-20 $\mu$m, with the average diameter (D50) being measured according to the method described in the specification.

4. The method for preparing positive electrode slurry for a lithium secondary battery according to anyone of claims 1 to 3, wherein the positive electrode active material has a tap density of 0.5-5 g/cm$^3$, with the tap density being measured as described in the specification.

5. The method for preparing positive electrode slurry for a lithium secondary battery according to anyone of claims 1 to 4, wherein the conductive material shows an average diameter (D50) distribution of 0.9-1.48 $\mu$m in the secondarily dispersed slurry, wherein the average diameter distribution (D50) is measured as described in the specification.

6. The method for preparing positive electrode slurry for a lithium secondary battery according to anyone of claims 1 to 5, wherein the binder polymer is any one selected from the group consisting of polyvinylidene fluoride, polyhexafluoropropylene-co-polyvinylidene fluoride and chlorotrifluoroethylene, or a combination of two or more of them.

7. The method for preparing positive electrode slurry for a lithium secondary battery according to anyone of claims 1 to 6, wherein the positive electrode slurry has a viscosity of 3-12 Pa.s at a shear rate of 0.1/s after the secondary dispersion, wherein the viscosity is measured as described in the specification.

**Patentansprüche**

1. Verfahren zum Herstellen einer positiven Elektrodenaufschlämmung für eine Lithium-Sekundärbatterie, das die folgenden Schritte umfasst:

   Zugeben eines positiven Elektrodenaktivmaterials, eines leitfähigen Materials, eines Bindemittelpolymers und eines Dispergiermittels zu einem Lösungsmittel und Mischen davon, um eine Aufschlämmung zu erhalten, die einen Feststoffgehalt von 69 - 74 Gew.-% aufweist;
   Dispergieren der Aufschlämmung zuerst für 50 Minuten bis 100 Minuten, so dass die Migrationsrate des Feststoffgehalts 3 - 6 m/s sein kann; und
   Dispergieren der Aufschlämmung als zweites für 5 Minuten bis 20 Minuten, so dass die Migrationsrate des Feststoffgehalts 14 - 27 m/s sein kann,
   wobei die Migrationsrate des Feststoffgehalts die Migrationslänge des Feststoffgehalts ist, die durch die auf die Aufschlämmung in dem Dispersionssystem, das zum Dispergieren der Aufschlämmung verwendet wird, ausgeübte Kraft in Abhängigkeit von Zeit verursacht wird,
   wobei sich die Migrationsrate des Feststoffgehalts auf die Migrationslänge (m) pro Sekunde des Feststoffgehalts in der Aufschlämmung bezieht, die durch die Scherkraft verursacht wird, die durch die Reibung zwischen einem in dem Dispersionssystem bereitgestellten Aufschlämmungsdispergierelements und der Aufschlämmung während der Rotation des Elements erzeugt wird, und
   wobei die Migrationsrate des Feststoffgehalts durch die folgende Mathematische Formel 1 berechnet wird:

[Mathematische Formel 1]

$$\text{Migrationsrate von Feststoffgehalt (m/s)} = 2\pi R(m)*A$$

wobei R der Radius des Aufschlämmungsdispergierelements ist und
A die Umdrehung pro Minute (U/min) des Aufschlämmungsdispergierelements ist, geteilt durch 60 Sekunden.

**2.** Verfahren zum Herstellen einer positiven Elektrodenaufschlämmung für eine Lithium-Sekundärbatterie nach Anspruch 1, wobei die positive Elektrodenaufschlämmung 90 - 98 Gew.-% des positiven Elektrodenaktivmaterials, 0,5 - 5 Gew.-% des leitfähigen Materials, 0,5 - 5 Gew.-% des Bindemittelpolymers und 0,2 - 0,4 Gew.-% des Dispergiermittels, bezogen auf das Gesamtgewicht des Feststoffgehalts, umfasst.

**3.** Verfahren zum Herstellen einer positiven Elektrodenaufschlämmung für eine Lithium-Sekundärbatterie nach einem beliebigen der Ansprüche 1 oder 2, wobei das positive Elektrodenaktivmaterial einen durchschnittlichen Durchmesser (D50) von 0,5 - 20 $\mu$m aufweist, wobei der durchschnittliche Durchmesser (D50) gemäß dem in der Beschreibung beschriebenen Verfahren gemessen wird.

**4.** Verfahren zum Herstellen einer positiven Elektrodenaufschlämmung für eine Lithium-Sekundärbatterie nach einem beliebigen der Ansprüche 1 bis 3, wobei das positive Elektrodenaktivmaterial eine Klopfdichte von 0,5 - 5 g/cm$^3$ aufweist, wobei die Klopfdichte wie in der Beschreibung beschrieben gemessen wird.

**5.** Verfahren zum Herstellen einer positiven Elektrodenaufschlämmung für eine Lithium-Sekundärbatterie nach einem beliebigen der Ansprüche 1 bis 4, wobei das leitfähige Material eine Verteilung des durchschnittlichen Durchmessers (D50) von 0,9 - 1,48 $\mu$m in der sekundär dispergierten Aufschlämmung aufweist, wobei die durchschnittliche Durchmesserverteilung (50) wie in der Beschreibung beschrieben gemessen wird.

**6.** Verfahren zum Herstellen einer positiven Elektrodenaufschlämmung für eine Lithium-Sekundärbatterie nach einem beliebigen der Ansprüche 1 bis 5, wobei das Bindemittelpolymer ein beliebiges Polymer ist, ausgewählt aus der Gruppe, bestehend aus Polyvinylidenfluorid, Polyhexafluorpropylen-Co-Polyvinylidenfluorid und Chlortrifluorethylen, oder einer Kombination aus zweien oder mehreren davon.

**7.** Verfahren zum Herstellen einer positiven Elektrodenaufschlämmung für eine Lithium-Sekundärbatterie nach einem beliebigen der Ansprüche 1 bis 6, wobei die positive Elektrodenaufschlämmung eine Viskosität von 3 - 12 Pa.s bei einer Scherrate von 0,1/s nach der sekundären Dispersion aufweist, wobei die Viskosität wie in der Beschreibung beschrieben gemessen wird.

**Revendications**

**1.** Procédé de préparation d'une suspension d'électrode positive pour une batterie secondaire au lithium qui comprend les étapes consistant à :

ajouter un matériau actif d'électrode positive, un matériau conducteur, un polymère liant et un dispersant à un solvant et les mélanger pour obtenir une suspension ayant un contenu solide de 69 à 74 % en poids ;
disperser en premier lieu la suspension pendant 50 minutes à 100 minutes de sorte que la vitesse de migration du contenu solide puisse être de 3 à 6 m/s ; et
disperser en second lieu la suspension pendant 5 minutes à 20 minutes de sorte que la vitesse de migration du contenu solide puisse être de 14 à 27 m/s,
dans lequel la vitesse de migration du contenu solide est la longueur de migration du contenu solide due à la force appliquée à la suspension dans le système de dispersion utilisé pour disperser la suspension en fonction du temps,
dans lequel la vitesse de migration du contenu solide fait référence à la longueur de migration (m) par seconde du contenu solide dans la suspension, due à la force de cisaillement générée par le frottement entre un élément de dispersion de suspension disposé dans le système de dispersion et la suspension lors de la rotation de l'élément, et
dans lequel la vitesse de migration du contenu solide est calculée par la formule mathématique 1 suivante :

[Formule mathématique 1]

$$\text{Vitesse de migration du contenu solide (m/s)} = 2\pi R(m)*A$$

dans laquelle R est le rayon de l'élément de dispersion de suspension, et
A représente le nombre de tours par minute (tr/min) de l'élément de dispersion de suspension, divisé par 60 secondes.

**2.** Procédé de préparation d'une suspension d'électrode positive pour une batterie secondaire au lithium selon la revendication 1, dans lequel la suspension d'électrode positive comprend 90 à 98 % en poids du matériau actif d'électrode positive, 0,5 à 5 % en poids du matériau conducteur, 0,5 à 5 % en poids du polymère liant, et 0,2 à 0,4 % en poids du dispersant, par rapport au poids total du contenu solide.

**3.** Procédé de préparation d'une suspension d'électrode positive pour une batterie secondaire au lithium selon l'une quelconque des revendications 1 ou 2, dans lequel le matériau actif d'électrode positive a un diamètre moyen (D50) de 0,5 à 20 $\mu$m, le diamètre moyen (D50) étant mesuré selon le procédé décrit dans la description.

**4.** Procédé de préparation d'une suspension d'électrode positive pour une batterie secondaire au lithium selon l'une quelconque des revendications 1 à 3, dans lequel le matériau actif d'électrode positive a une densité après tassement de 0,5 à 5 g/cm$^3$, la densité après tassement étant mesurée comme décrit dans la description

**5.** Procédé de préparation d'une suspension d'électrode positive pour une batterie secondaire au lithium selon l'une quelconque des revendications 1 à 4, dans lequel le matériau conducteur présente une distribution de diamètre moyen (D50) de 0,9 à 1,48 $\mu$m dans la suspension dispersée en second lieu, dans lequel la distribution de diamètre moyen (D50) est mesurée comme décrit dans la description.

**6.** Procédé de préparation d'une suspension d'électrode positive pour une batterie secondaire au lithium selon l'une quelconque des revendications 1 à 5, dans lequel le polymère liant est l'un quelconque sélectionné dans le groupe constitué du fluorure de polyvinylidène, du polyhexafluoropropylène-co-fluorure de polyvinylidène et du chlorotrifluoroéthylène, ou une combinaison de deux ou plus de ceux-ci.

**7.** Procédé de préparation d'une suspension d'électrode positive pour une batterie secondaire au lithium selon l'une quelconque des revendications 1 à 6, dans lequel la suspension d'électrode positive a une viscosité de 3 à 12 Pa.s à une vitesse de cisaillement de 0,1/s après la dispersion secondaire, dans lequel la viscosité est mesurée comme décrit dans la description.